# EUROPEAN PATENT SPECIFICATION

(11) **EP 4 235 031 B1**
(45) Date of publication and mention of the grant of the patent: **18.06.2025**
(21) Application number: 22878728.9
(22) Date of filing: 30.08.2022
(51) Int. Cl.: F23R 3/20, F23R 3/28, F02C 3/04

(54) **INJECTOR, COMBUSTOR COMPRISING SAME, AND GAS TURBINE COMPRISING SAME**
INJEKTOR, BRENNKAMMER DAMIT UND GASTURBINE DAMIT
INJECTEUR, CHAMBRE DE COMBUSTION LE COMPRENANT, ET TURBINE À GAZ LE COMPRENANT

(30) Priority: 07.10.2021 KR 20210133512; 27.12.2021 KR 20210188701; 20.07.2022 KR 20220089863
(43) Date of publication of application: 30.08.2023
(73) Proprietor: Korea Advanced Institute of Science and Technology, Daejeon 34141 (KR)
(72) Inventor: KIM, Kyu Tae, Daejeon 34049 (KR); LEE, Taesong, Daejeon 34141 (KR)
(74) Representative: Meissner Bolte Partnerschaft mbB
(86) International application number: PCT/KR2022/012987
(87) International publication number: WO 2023/058907

(56) References cited:
- EP-A1- 2 757 242
- CN-B- 109 579 052
- CN-B- 109 579 052
- JP-A- 2005 517 862
- KR-A- 20190 054 817
- KR-A- 20190 108 955
- KR-B1- 102 138 016
- US-A- 3 916 619
- US-A- 4 057 190
- US-A1- 2018 187 891
- DATABASE WPI Week 200661, Derwent World Patents Index; AN 2006-586992, XP002811251

## Description

### [Technical Field]

The present disclosure relates to an injector, a burner including the same, and a gas turbine including the same.

### [Background Art]

In recent years, starting with a report of UNFCCC that is an international organism for preventing global warming and Paris Agreement, discussions on carbon-neutrality for reducing the amount of carbon dioxide (CO₂) have been made all over the world. In particular, because power sector occupies about 25% of a total amount of discharged carbon dioxide and the power generation systems are generally driven for a long time of unit of several months, a measure for carbon-neutrality is strongly required.

Accordingly, the gas turbine manufacturers have determined hydrogen (H₂) that does not include carbon and thus does not generate carbon dioxide during combustion as a new measure, and thus have developed technologies using hydrogen from the early 2000-th.

However, hydrogen shows a high reactive property, and shows a flame propagation speed of about 6 times as high as those of existing fuels, such as methane, propane (C₃H₈) and ethylene (C₂H₄). Accordingly, hydrogen may have a wide operation range without a swirl generator but may tend to cause flashbacks as well.

The flashback means that a propagation speed of flames becomes higher than the flow velocity of supplied reactant mixture due to a high reactive property or strong combustion oscillations of hydrogen flame and thus the flames flow back. Because the flames that flowed back to an upstream side are attached to a site, at which a design for cooling is vulnerable and fuse a system, it is impossible to stably drive a hydrogen gas turbine in an existing burner nozzle structure that has utilized natural gas as a main fuel.

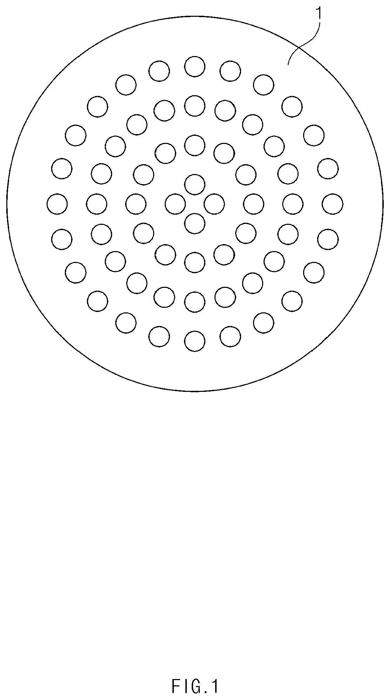

The industrial fields have sought to solve instability of flames of hydrogen by completely changing the shape of the injector. Because hydrogen flames easily incur flashbacks due to a large diameter of nozzles in a multinozzle injector including a swirl generator, most gas turbine manufacturers have employed a multi-tube or micro-mixer type nozzle having a diameter of unit of several millimeters to optimize the shape of the injector. FIG. 1 is a view conceptually illustrating a cross-section of a conventional multi-tube injector.

However, in a fuel of a high hydrogen fraction, it is still difficult to control flashbacks of flames even though a multi-tube design is utilized. That is, a new shape of an injector that may alleviate flashbacks of hydrogen flames has been required.

Injectors according to the prior art are known from US 3,916,619 and US 2018/0187891 A1.

### [Disclosure]

### [Technical Problem]

An aspect of the present disclosure provides an injector that may alleviate flashbacks of hydrogen flames, a burner including the same, and a gas turbine including the same.

Another aspect of the present disclosure provides an injector that may alleviate combustion oscillations, a burner including the same, and a gas turbine including the same.

### [Technical Solution]

An injector according to the invention is defined in claim 1 and includes an injector body, and a slit formed to pass the injector body along a reference direction, and the slit may include a first slit portion having a shape that extends along a circumferential direction of an imaginary reference circle, a center of which is an imaginary reference axis that extends along the reference direction, and a second slit portion having a shape that extends along a radial direction of the reference circle.

The first slit portion includes a (1-1)-th slit having a shape that extends along an imaginary first reference circle, a center of which is the reference axis, and a (1-2)-th slit having a shape that extends along a circumferential direction of an imaginary second reference circle, a center of which is the reference axis and a diameter of which is larger than that of the first reference circle.

When it is assumed that an area between the first reference circle and the second reference circle is a first area, the second slit portion includes a (2-1)-th slit disposed in the first area and extending in a radial direction of the first reference circle.

When viewed along the reference direction, the (1-1)-th slit and the (2-1)-th slit may be spaced apart from each other along the radial direction of the first reference circle.

In another example, a plurality of (1-1)-th slits may be formed, and wherein the plurality of (1-1)-th slits may be spaced apart from each other along a circumferential direction of the first reference circle, and a portion of the first reference circle may have a shape of a first reference arc.

In another example, a plurality of (1-2)-th slits may be formed, the plurality of (1-2)-th slits may be spaced apart from each other along a circumferential direction of the second reference circle, and a portion of the second reference circle may have a shape of a second reference arc, and a size of a central angle of a first fan shape that defines the first reference arc may be larger than a size of a second fan shape that defines the second reference arc.

In another example, a plurality of (2-1)-th slits may be formed, and the plurality of (2-1)-th slits may be spaced apart from each other along the circumferential direction of the first reference circle.

In another example, a plurality of (1-1)-th slits may be formed, the plurality of (1-1)-th slits may be spaced apart from each other along the circumferential direction of the first reference circle, and when it is assumed that a space between a pair of (1-1)-th slits that are adjacent to each other is a (1-1)-th spacing space, the (2-1)-th slit may include a spacing space overlapping slit that overlaps the (1-1)-th spacing space when viewed along the radial direction.

In another example, a plurality of (1-1)-th slits and a plurality of (1-2)-th slots may be formed, and the number of the (1-1)-th slits may be smaller than the number of the (1-2)-th slits.

In another example, the first slit portion may further include a (1-3)-th slit having a shape that extends along a circumferential direction of an imaginary third reference circle, a center of which is the reference axis and a diameter of which is larger than that of the second reference circle, and when it is assumed that an area between the second reference circle and the third reference circle is a second area, the second slit portion may further include a (2-2)-th slit disposed in the second area and extending in a radial direction of the second reference circle.

In another example, a plurality of (2-1)-th slits and a plurality of (2-2)-th slots may be formed, and the number of the (2-1)-th slits may be smaller than the number of the (2-2)-th slits.

In another example, a plurality of (2-1)-th slits and a plurality of (2-2)-th slots may be formed, and the (2-2)-th slit may include an overlapping slit that overlaps any one of the (2-1)-th slits when viewed along the radial direction.

In another example, a plurality of (2-1)-th slits and a plurality of (2-2)-th slots may be formed, and when it is assumed that one direction that is perpendicular to the reference direction is a first direction and one direction that is perpendicular to the reference direction and the first direction is a second direction, the number of the (2-1)-th slits located in a first reference area defined by a first line extending from the reference axis along the first direction and a second line extending from the reference axis along the second direction, when viewed along the reference direction, may be the same as the number of the (2-2)-th slits located in the first reference area and the number of the (2-1)-th slits located in a second reference area defined by the first line and a third line extending from the reference axis along an opposite direction to the second direction may be smaller than the number of the (2-2)-th slits located in the second reference area.

In another example, the numbers of the (2-1)-th slits and the (2-2)-th slits located in the first reference area may be the same as the numbers of the (2-1)-th slits and the (2-2)-th slits located in a third reference area defined by a fourth line extending from the reference axis along an opposite direction to the first direction and the third line, and the numbers of the (2-1)-th slits and the (2-2)-th slits located in the second reference area may be the same as the numbers of the (2-1)-th slits and the (2-2)-th slits located in a fourth reference area defined by the second line and the fourth line, respectively.

In another example, the plurality of second slit portions may be provided, and the numbers of the second slit portions disposed on opposite sides of a reference plane that is an imaginary plane including the reference axis when the injector body is divided by the reference plane may be different.

A burner according to an aspect of the present disclosure may include a supply pipe that supplies a fuel and air, an injector coupled to the supply pipe and that injects the fuel and the air, which are introduced thereinto, and a combustion chamber configured such that the fuel and the air injected by the injector are introduced thereinto, the injector may include a slit extending along a reference direction, and the slit may include a first slit portion having a shape that extends along a circumference direction of an imaginary reference circle, and a second slit portion having a shape that extends along a radial direction of the reference circle.

A gas turbine according to an aspect of the present disclosure may include a compressor that compresses and discharge air, a burner that mixes a fuel and the air compressed and discharged by the compressor, and then generate a combustion gas by burning a mixture of the fuel and the air, and turbine blades that is rotated by the combustion gas delivered from the burner, the burner may include an injector that injects the fuel and the air compressed and discharged by the compressor, which are mixed, and the injector may include a slit including a first slit portion having a shape that extends along a circumferential direction of the imaginary reference circle and a second slit portion having a shape that extends along a radial direction of the reference circle.

### [Advantageous Effects]

According to the present disclosure, because slits having smaller widths than those of an existing multi-tube injector are included, a flashback phenomenon may be alleviated.

Furthermore, according to the present disclosure, because the slits having widths that are similar to the thicknesses of the flames are included as compared with the conventional multi-tube circular injector to restrain a change of the surfaces of the flames, the instability of combustion may be alleviated and combustion oscillations may be alleviated.

### [Description of Drawings]

FIG. 1 is a view conceptually illustrating a conventional multi-tube injector.
FIG. 2 is a cutaway perspective view conceptually illustrating a gas turbine, to which an injector according to the present disclosure may be applied.
FIG. 3 is a view conceptually illustrating a cross-section of a burner, to which an injector according to the present disclosure may be applied.
FIG. 4 is a view conceptually illustrating an appearance of an injector according to a first embodiment of the present invention, when viewed from a reference direction.
FIG. 5 is a view conceptually illustrating an injector according to a first embodiment of the present disclosure.
FIG. 6 is a view conceptually illustrating a cross-section of any one of slits of an injector according to a first embodiment of the present disclosure.
FIG. 7 is a view conceptually illustrating a flashback phenomenon.
FIG. 8 is a view conceptually illustrating equipment for a hydrogen combustion test.
FIG. 9 is a view illustrating a comparison result of hydrogen combustion tests of the multi-tube injector of FIG. 1 and the injector of FIG. 4.
FIG. 10 is a view illustrating a result of a hydrogen combustion test when a flow velocity of a mixture of a fuel and air, which passes through a slit, is 50 m/s.
FIG. 11 is a view conceptually illustrating an appearance of an injector according to a second embodiment of the present invention, when viewed from a reference direction.
FIG. 12 is a view conceptually illustrating an appearance of an injector according to a third embodiment of the present invention, when viewed from a reference direction.

### [Mode for Invention]

This application claims the benefit of priority to Korean Patent Application No. 10-2021-0133512, filed in the Korean Intellectual Property Office on October 7, 2021, Korean Patent Application No. 10-2021-0188701, filed in the Korean Intellectual Property Office on December 27, 2021, and Korean Patent Application No. 10-2022-0089863, filed in the Korean Intellectual Property Office on July 20, 2022.

Hereinafter, some embodiments of the present disclosure will be described in detail with reference to the exemplary drawings. In providing reference numerals to the constituent elements of the drawings, the same elements may have the same reference numerals even if they are displayed on different drawings. Further, in the following description of the present disclosure, a detailed description of known functions and configurations incorporated herein will be omitted when it may make the subject matter of the present disclosure rather unclear.

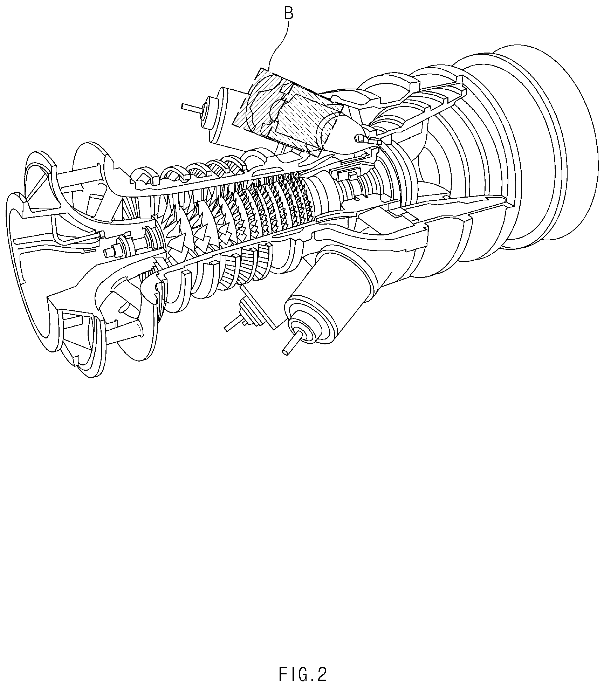

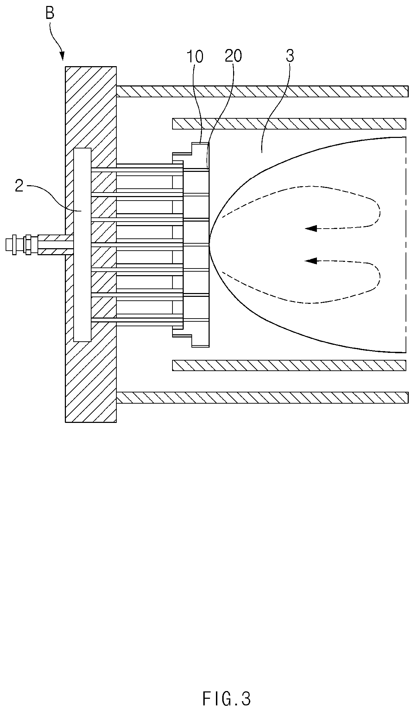

An injector according to the present disclosure may be an injector that is applied to a burner of a gas turbine. FIG. 2 is a cutaway perspective view conceptually illustrating a gas turbine, to which an injector according to the present disclosure may be applied. FIG. 3 is a view conceptually illustrating a cross-section of a burner, to which an injector according to the present disclosure may be applied. FIG. 3 may be understood as a conceptual illustration of area "B" of FIG. 2.

Hereinafter, embodiments of injectors will be described in detail.

### First Embodiment

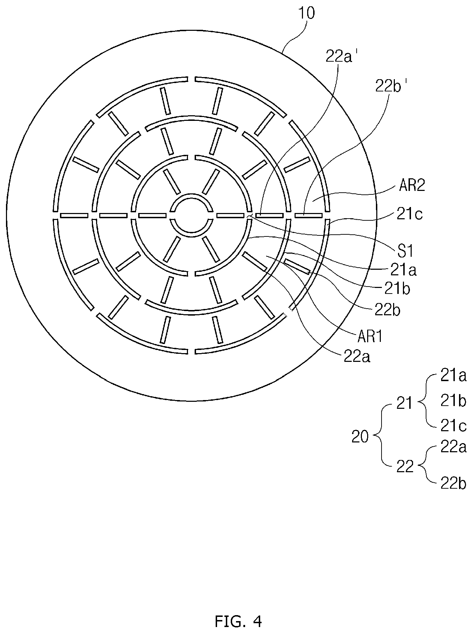

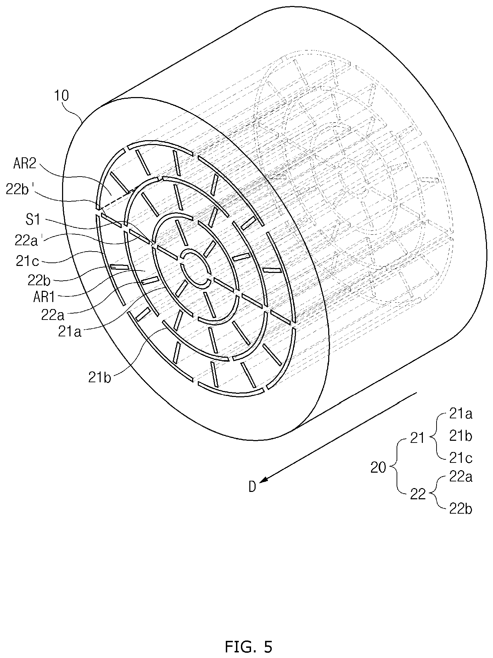

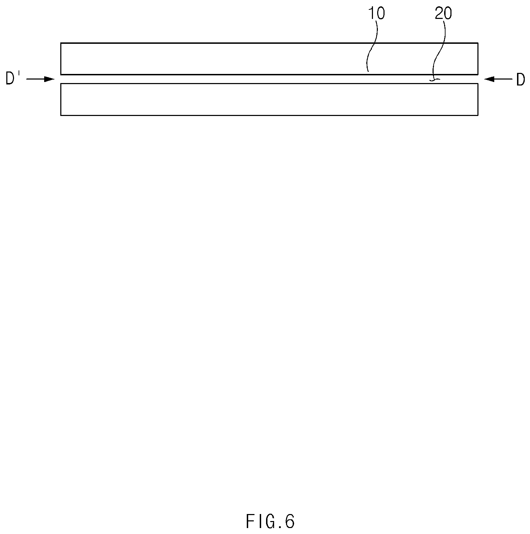

FIG. 4 is a view conceptually illustrating an appearance of an injector according to a first embodiment of the present disclosure, when viewed from a reference direction. FIG. 5 is a view conceptually illustrating the injector according to a first embodiment of the present disclosure. FIG. 6 is a view conceptually illustrating a cross-section of any one of slits of the injector according to a first embodiment of the present disclosure.

The injector may include an injector body 10 and slits 20. The slits 20 may be formed to pass through the injector body 10 along a reference direction "D". The injector body 10 may be formed of a metallic material. The injector body 10 may extend along the reference direction "D".

The slits 20 may include first slit portions 21 and second slit portions 22. The first slit portions 21 may have shapes that extend along a circumferential direction of an imaginary reference circle. The reference circle may be a circle, a center of which is an imaginary reference axis that extends along the reference direction "D".

A first width of the first slit portions 21 may be 0.37 mm to 2 mm. Preferably, the first width may be 1.5 mm. The first width may be a length of the first slit portions 21 along a direction that is perpendicular to an extension direction of the first slit portions 21. The first width may be similar to a thickness which hydrogen frames may theoretically have.

The second slit portions 22 may have shapes that extend along a radial direction of the reference circle. A second width of the second slit portions 22 may be 0.37 mm to 2 mm. Preferably, the second width may be 1.5 mm. The second width may be a length of the second slit portions 22 along a direction that is perpendicular to an extension direction of the second slit portions 22. The second width may be similar to a thickness which hydrogen frames may theoretically have.

The first slit portions 21 may include a (1-1)-th slit 21a and a (1-2)-th slit 21b. The (1-1)-th slit 21a may have a shape that extends along an imaginary first reference circle, a center of which is the reference axis. Furthermore, the (1-2)-th slit 21b may have a shape that extends along an imaginary second reference circle, a center of which is the reference axis. A diameter of the second reference circle may be larger than that of the first reference circle.

A plurality of slits 21a may be formed. The plurality of (1-1)-th slits 21a may be spaced apart from each other along a circumferential direction of the first reference circle, and may have shapes of a first reference arc that is a portion of the first reference circle. A (1-1)-th spacing space S1 may be formed between a pair of (1-1)-th slits 21a that are adjacent to each other.

A plurality of slits 21b may be formed. The plurality of (1-2)-th slits 21b may be spaced apart from each other along a circumferential direction of the second reference circle, and may have shapes of a second reference arc that is a portion of the second reference circle.

A size of a central angle of a first fan shape that defines the first reference arc may be larger than a size of a central angle of a second fan shape that defines the second reference arc. This mean that the number of the (1-1)-th slits 21a is smaller than the number of the (1-2)-th slits 21b.

The slit portions 22 may include (2-1)-th slits 22a. The (2-1)-th slits 22a may be disposed in a first area AR1, and may extend in a radial direction of the first reference circle. The first area AR1 may mean an area between the first reference circle and the second reference circle.

A plurality of slits 22a may be formed. The plurality of (2-1)-th slits 22a may be spaced apart from each other along a circumferential direction of the first reference circle.

The (2-1)-th slits 22a may include spacing space overlapping slits 22a'. The spacing space overlapping slits 22a' may mean the (2-1)-th slits that overlap the (1-1)-th spacing space S1 when viewed along radial directions of the plurality of (2-1)-th slits 22a. This may mean that the plurality of (2-1)-th slits 22a may include (2-1)-th slits that overlap the (1-1)-th spacing space S1 and (2-1)-th slits that do not overlap it, when viewed along the radial directions.

The first slit portions 21 may further include (1-3)-th slits 21c. The (1-3)-th slit 21c may have shapes that extend along a circumferential direction of a third reference circle. The third reference circle may be an imaginary circle, a center of which is the reference axis and a diameter of which is larger than that of the second reference circle.

A plurality of (1-3)-th slits 21c may be formed. The plurality of (1-3)-th slits 21c may be spaced apart from each other along the circumferential direction of the third reference circle, and may have shapes of a third reference arc that is a portion of the third reference circle.

The slit portions 22 may further include the (2-2)-th slits 22b. The (2-2)-th slits 22b may be disposed in a second area AR2, and may extend in a radial direction of the second reference circle. The second area AR2 may mean an area between the second reference circle and the third reference circle.

A plurality of (2-2)-th slits 22b may be formed. The plurality of (2-2)-th slits 22b may be spaced apart from each other along a circumferential direction of the second reference circle.

The (2-2)-th slits 22b may include overlapping slits 22b'. The overlapping slits 22b' may mean the (2-2)-th slits that overlap any one of the (2-1)-th slits 22a' when viewed along radial directions of the (2-2)-th slits 22b.

This may mean that the plurality of (2-2)-th slits 22b may include (2-2)-th slits that overlap any one of the (2-1)-th slits 22a, and (2-2)-th slits that do not overlap it.

The injector according to the first embodiment of the present disclosure may be an injector, in which a flashback phenomenon may be alleviated. FIG. 6 is a view conceptually illustrating a cross-section of any one of slits of the injector according to a first embodiment of the present disclosure. A premixed fuel/air mixture may be supplied to the slits 20 along the reference direction **"D".**

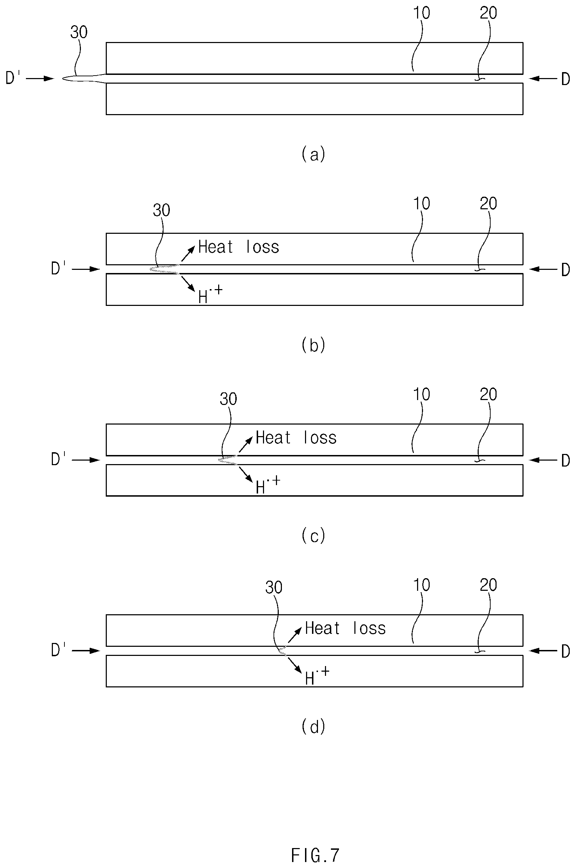

FIG. 7 is a view conceptually illustrating a flashback phenomenon. As illustrated in FIGS. 7A to 7D, flames 30 that undergo flashback may flow in an opposite direction D' to the reference direction "D". The injector according to the first embodiment of the present disclosure includes the slits 20, cross-sectional areas of which are larger than those of a conventional multi-tube nozzle with reference to volumes thereof. The slits 20 having the larger cross-sectional area with reference to volumes may decrease a flashback phenomenon as compared with the conventional multi-tube nozzle due to two following reasons.

First, the flames that undergo flashback may induce heat loss through the metallic injector body 10 while they pass through the slits 20. When the heat loss becomes higher than the heat generated by the combustion reaction, the combustion reaction may be suppressed. Because the present disclosure includes the slits 20 having the larger cross-sectional area than that of the multi-tube nozzle with reference to volumes, an area, in which the flames that flow back may contact an inner surface of the injector body 10, may be increased. Accordingly, heat loss may be increased as compared with the conventional multi-tube nozzle, which may decrease the flashback phenomenon.

Second, in the combustion process, radical ions are repeatedly generated and re-bonded. In the injector according to the first embodiment of the present disclosure, hydrogen radicals are diffused via a wall surface of the metallic injector body 10, and the diffusion of the hydrogen radicals on the wall surface may suppress the combustion reaction. The hydrogen radicals are intermediate products that are necessary for a combustion reaction mechanism, and the combustion reaction may be halted when the hydrogen radicals disappear due to the diffusion on the wall surface. Because the present disclosure includes the slits 20 having a larger cross-sectional area than that of the conventional multi-tube nozzle with reference to volumes, an area, in which the hydrogen radicals may disappear due to the diffusion on the wall surface, may be provided, and thus the flashback phenomenon may be alleviated.

Furthermore, the injector according to the first embodiment of the present disclosure may be an injector, in which combustion oscillations may be alleviated. The combustion oscillations are related to combustion instability. Because the combustion instability is dominantly influenced by a change in the shape of the flames, the change in the shape of the flames has to be minimized for the control. To minimize the change in the shape of the flames, the shape of the flames has to have a shape having a relatively large surface area.

In the conventional multi-tube nozzle, because the shape of the flames may be viewed conically due to the tubular shape, the conical flames may be contracted and expanded due to external perturbations. Accordingly, a possibility of, the shapes of the flames, being changed may be high.

The injector according to the first embodiment of the present disclosure includes the slits having a larger cross-sectional area with reference to volumes, a possibility of the change in the thin flame surface is relatively low, and thus, a heat release rate of the flames may become lower and an instability of combustion may be decreased, whereby combustion vibrations may be restrained.

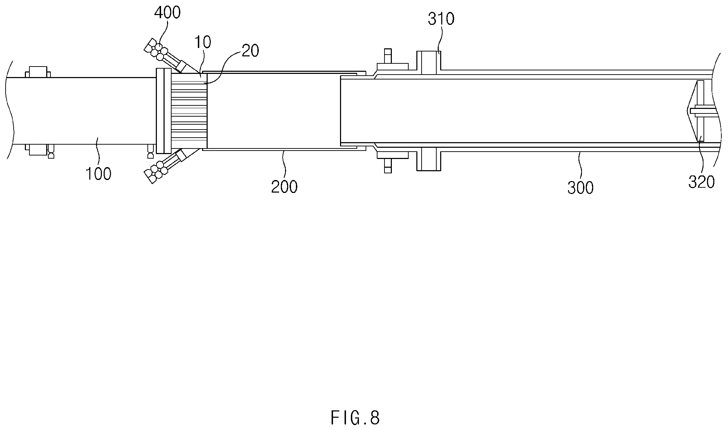

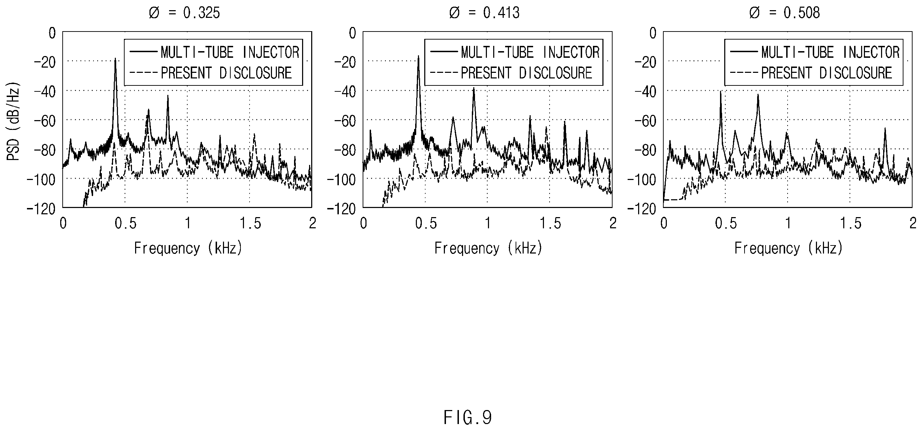

FIG. 8 is a view conceptually illustrating equipment for a hydrogen combustion test. FIG. 9 is a view illustrating a comparison result of hydrogen combustion tests of the multi-tube injector of FIG. 1 and the injector of FIG. 4.

The equipment for a hydrogen combustion test may include a fuel/air mixing part 100, a quartz tube 200, a metal tube 300, and a dynamic pressure sensor 400. The metal tube 300 may include a cooling air introducing pipe 310 and a piston 320. The injector body 10 may be disposed between the fuel/air mixing part 100 and the quartz tube 200. The dynamic pressure sensor 400 may be configured to measure a magnitude of acoustic vibrations due to the combustion vibrations.

For the hydrogen combustion test, the hydrogen/air mixture that passed through the fuel/air mixing part 100 was ignited in the injector body 10, and the magnitude of the acoustic vibrations due to the combustion vibrations was measured by the dynamic pressure sensor 400 after the planned flow velocity and equivalence ratio condition is reached.

In FIG. 9, results of hydrogen combustion tests of the multi-tube injector and the injector according to the first embodiment of the present disclosure in a condition, in which the flow velocity of the fuel/air mixture that passed through the slits 20 was 25 m/s and equivalence ratios (φ) were 0.325, 0.413, and 0.508, respectively, are compared. Then, the equivalence ratio condition of the experiment corresponds to a level that is similar to or higher than a temperature utilized in management of an actual turbine in a condition, in which adiabatic flame temperatures were 1400 K, 1600K, and 1800 K.

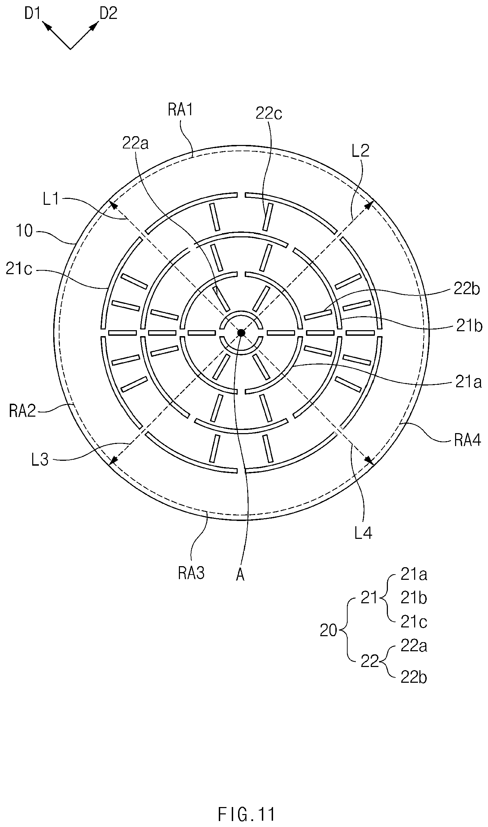

The X axis may mean frequencies. The PSD of the Y axis is a power spectral density, and is a value that shows the magnitude of acoustic vibrations due to the combustion vibrations. As illustrated in FIG. 11, it may be identified that the acoustic vibrations of the injector (a dotted line) according to the embodiment of the present disclosure were alleviated as compared with the conventional multi-tube injector (a solid line) in all equivalence ratio conditions.

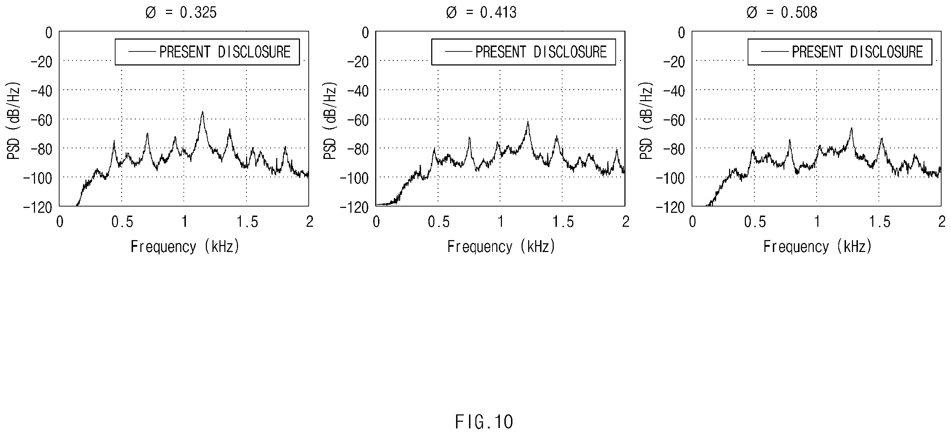

FIG. 10 is a view illustrating a result of a hydrogen combustion test when a flow velocity of a mixture of a fuel and air, which passes through a slit, is 50 m/s. In more detail, in FIG. 10, a result of a hydrogen combustion test of the injector according to the first embodiment of the present disclosure in a condition, in which the flow velocity of the fuel/air mixture that passed through the slits 20 was 50 m/s and equivalence ratios (φ) were 0.325, 0.413, and 0.508, respectively, was measured. It may be seen in FIG. 10 that an experimental result was secured in a situation that is similar to a management condition of an actual gas turbine. Referring to FIG. 10, it may be identified that the acoustic vibrations show an aspect that is stabilized as a whole similarly to the experimental result of FIG. 9.

### Burner

Hereinafter, a burner including the injector according to the first embodiment of the present disclosure will be described in detail with reference to the above-described contents. The contents on the injector have been described above, and a detailed description thereof will be omitted. FIG. 3 may be referenced for understanding.

As illustrated in FIG. 3, a burner "B" may include a supply pipe 2, the injector, and a combustion chamber 3. The supply pipe 2 may be configured to supply a fuel and air. The injector may be coupled to the supply pipe 2 and may be configured to inject the fuel and the air, which are introduced. The combustion chamber 3 may be configured such that the fuel and the air, which are injected, may be introduced thereinto. Furthermore, in the combustion chamber 3, the fuel and the air, which are injected, may be mixed. A combustion reaction may occur in the combustion chamber 3.

### Gas Turbine

Hereinafter, a gas turbine including the injector according to the first embodiment of the present disclosure will be described in detail with reference to the above-described contents. The contents on the injector have been described above, and a detailed description thereof will be omitted.

The gas turbine may include the burner "B" and turbine blades. The compressor may be configured to compress and discharge the air. The burner "B" may be configured to mix the fuel and the air compressed and discharged by the compressor, and then to generate a combustion gas by burning a mixture of the fuel and the air. The turbine blades may be configured to be rotated by the combustion gas delivered from the burner "B".

The burner "B" may include the injector that injects the fuel and the air compressed and discharged by the compressor, which are mixed.

### Second Embodiment

FIG. 11 is a view conceptually illustrating an appearance of an injector according to a second embodiment of the present disclosure, when viewed from a reference direction. Hereinafter, referring to FIG. 11, the injector according to the second embodiment of the present disclosure will be described. The injector according to the second embodiment is different from the injector according to the first embodiment in disposition of the second slit portions. The same or corresponding reference numerals are given to configurations that are the same as or correspond to those of the injector according to the first embodiment, and a detailed description thereof will be omitted.

Hereinafter, one direction that is perpendicular to the reference direction "D" will be referred to a first direction D1, and one direction that is perpendicular to the reference direction "D" and the first direction D1 will be referred to as a second direction D2.

Furthermore, first to fourth lines L1, L2, L3, and L4 and first to fourth reference areas RA1, RA2, RA3, and RA4 will be defined for convenience of description. The first line L1 may mean a line that extends from the reference axis "A" along the first direction D1. The second line L2 may mean a line that extends from the reference axis "A" along the second direction D2. The third line L3 may mean a line that extends from the reference axis "A" along an opposite direction to the second direction D2. The fourth line L4 may mean a line that extends from the reference axis "A" along an opposite direction to the first direction D1.

The first reference area RA1 may mean an area that is defined by the first line L1 and the second line L2 when viewed along the reference direction "D". The second reference area RA2 may mean an area that is defined by the first line L1 and the third line L3. The third reference area RA3 may mean an area that is defined by the third line L3 and the fourth line L4. The fourth reference area RA4 may mean an area that is defined by the second line L2 and the fourth line L4. The first to fourth reference areas RA1, RA2, RA3, and RA4 may be disposed in a sequence thereof along a counterclockwise direction.

The number of the (2-1)-th slits located in the first reference area RA1 may be the same as the number of the (2-2)-th slits located in the first reference area RA1. Similarly, the number of the (2-2)-th slits located in the first reference area RA1 may be the same as the number of the (2-3)-th slits located in the first reference area RA1. As an example, each of the numbers of the (2-1)-th slits, the (2-2)-th slits, and the (2-3)-th slits located in the first reference area RA1 may be two.

The number of the (2-1)-th slits located in the second reference area RA2 may be smaller than the number of the (2-2)-th slits located in the second reference area RA2. Similarly, the number of the (2-2)-th slits located in the second reference area RA2 may be smaller than the number of the (2-3)-th slits located in the second reference area RA2. As an example, the number of the (2-1)-th slits located in the second reference area RA2 may be one, the number of the (2-2)-th slits may be three, and the number of the (2-3)-th slits may be five.

Meanwhile, the numbers of the (2-1)-th slits and the (2-2)-th slits located in the first reference area RA1 and the numbers of the (2-1)-th slits and the (2-2)-th slits located in the third reference area RA3 may be the same, respectively. Similarly, the number of the (2-3)-th slits located in the first reference area RA1 may be the same as the number of the (2-3)-th slits located in the third reference area RA3. That is, the first reference area RA1 and the third reference area RA3 may be formed to be symmetrical to each other.

The numbers of the (2-1)-th slits and the (2-2)-th slits located in the second reference area RA2 and the numbers of the (2-1)-th slits and the (2-2)-th slits located in the fourth reference area RA4 may be the same, respectively. Similarly, the number of the (2-3)-th slits located in the second reference area RA2 may be the same as the number of the (2-3)-th slits located in the fourth reference area RA4. That is, the second reference area RA2 and the fourth reference area RA4 may be formed to be symmetrical to each other.

The first slit portions 21 may be a configuration for dispersing distribution of frames in the radial direction and expanding an area of a nozzle. The second slit portions 22 may be a configuration for collapsing symmetry of distribution of flames in the circumferential direction through disposition or arrangement thereof. In more detail, when the disposition of the second slit portions 22 is changed to asymmetric disposition, the symmetry of the distribution of the flames may be collapsed. Because the high symmetry of the distribution of the flames may mean that big constructive interferences may occur, it may be regarded as high combustion instability.

That is, as described above, because the combustion instability is dominantly influenced by the change in the shape of the flames, the instability of combustion may become higher as the disposition of the second slit portions 22 becomes more symmetrical. This may mean that the instability of combustion may be alleviated as the disposition of the second slit portions 22 becomes more asymmetrical.

Because the asymmetry of the second slit portions 22 is higher than that of the injector according to the first embodiment in the case of the injector according to the second embodiment, the instability of combustion may be alleviated as compared with the injector according to the first embodiment.

### Third Embodiment

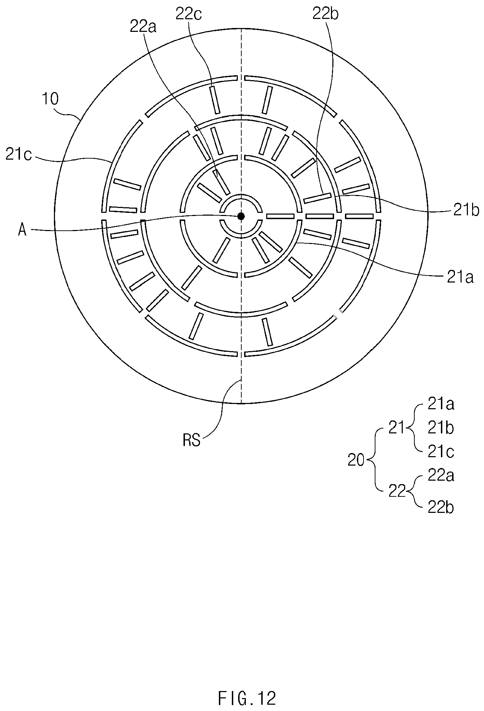

FIG. 12 is a view conceptually illustrating an appearance of an injector according to a third embodiment of the present disclosure, when viewed from a reference direction. Hereinafter, referring to FIG. 2, the injector according to the third embodiment of the present disclosure will be described. The injector according to the third embodiment is different from the injector according to the first embodiment in disposition of the second slit portions. The same or corresponding reference numerals are given to configurations that are the same as or correspond to those of the injector according to the first embodiment, and a detailed description thereof will be omitted.

In the injector according to the third embodiment, the numbers of the second slit portions 22 disposed on opposite sides of a reference plane RS that is an imaginary plane including the reference axis "A" when the injector body 10 is divided by the reference plane RS. That is, the injector according to the third embodiment may be understood as being a form, in which the symmetry of the disposition of the second slit portions 22 is collapsed.

Because the asymmetry of the second slit portions 22 is higher than that of the injector according to the first and second embodiments in the case of the injector according to the third embodiment, the instability of combustion may be alleviated as compared with the injector according to the first and second embodiments.

## Claims

1. An injector for a combustor of a gas turbine, the injector comprising:
an injector body (10); and
a slit (20) formed to pass the injector body (10) along a reference direction,
wherein the slit (20) includes:
a first slit portion (21) having a shape that extends along a circumferential direction of an imaginary reference circle, a center of which is an imaginary reference axis that extends along the reference direction; and
a second slit portion (22) having a shape that extends along a radial direction of the reference circle,
wherein the first slit portion (21) includes:
a (1-1)-th slit (21a) having a shape that extends along an imaginary first reference circle, a center of which is the reference axis; and
a (1-2)-th slit (21b) having a shape that extends along a circumferential direction of an imaginary second reference circle, a center of which is the reference axis and a diameter of which is larger than that of the first reference circle
**characterized in that**
when it is assumed that an area between the first reference circle and the second reference circle is a first area,
the second slit portion (22) includes:
a (2-1)-th slit (22a) disposed in the first area and extending
in a radial direction of the first reference circle.

2. The injector of claim 1, wherein when viewed along the reference direction,
the (1-1)-th slit (21a) and the (2-1)-th slit (22a) are spaced apart from each other along the radial direction of the first reference circle.

3. The injector of claim 1, wherein a plurality of (1-1)-th slits (21a) are formed, and
wherein the plurality of (1-1)-th slits (21a) are spaced apart from each other along a circumferential direction of the first reference circle, and a portion of the first reference circle has a shape of a first reference arc.

4. The injector of claim 3, wherein a plurality of (1-2)-th slits (21b) are formed,
wherein the plurality of (1-2)-th slits (21b) are spaced apart from each other along a circumferential direction of the second reference circle, and a portion of the second reference circle has a shape of a second reference arc, and
wherein a size of a central angle of a first fan shape that defines the first reference arc is larger than a size of a second fan shape that defines the second reference arc.

5. The injector of claim 1, wherein a plurality of (2-1)-th slits (22a) are formed, and
wherein the plurality of (2-1)-th slits (22a) are spaced apart from each other along the circumferential direction of the first reference circle.

6. The injector of claim 5, wherein a plurality of (1-1)-th slits (21a) are formed, and
wherein the plurality of (1-1)-th slits (21a) are spaced apart from each other along the circumferential direction of the first reference circle, and
wherein when it is assumed that a space between a pair of (1-1)-th slits (21a) that are adjacent to each other is a (1-1)-th spacing space,
the (2-1)-th slit (22a) includes:
a spacing space overlapping slit that overlaps the (1-1)-th spacing space when viewed along the radial direction.

7. The injector of claim 1, wherein a plurality of (1-1)-th slits (21a) and a plurality of (1-2)-th slits (21b) are formed, and
wherein the number of the (1-1)-th slits (21a) is smaller than the number of the (1-2)-th slits (21b). .

8. The injector of claim 1, wherein the first slit portion further includes:
a (1-3)-th slit (21c) having a shape that extends along a circumferential direction of an imaginary third reference circle, a center of which is the reference axis and a diameter of which is larger than that of the second reference circle, and
wherein when it is assumed that an area between the second reference circle and the third reference circle is a second area,
the second slit portion further includes:
a (2-2)-th slit (22b) disposed in the second area and extending in a radial direction of the second reference circle.

9. The injector of claim 8, wherein a plurality of (2-1)-th slits (22a) and a plurality of (2-2)-th slits (22b) are formed, and
wherein the number of the (2-1)-th slits is smaller than the number of the (2-2)-th slits.

10. The injector of claim 9, wherein a plurality of (2-1)-th slits (22a) and a plurality of (2-2)-th slits (22b) are formed, and
wherein the (2-2)-th slit includes:
an overlapping slit that overlaps any one of the (2-1)-th slits when viewed along the radial direction.

11. The injector of claim 9, wherein a plurality of (2-1)-th slits (22a) and a plurality of (2-2)-th slits (22b) are formed, and
wherein when it is assumed that one direction that is perpendicular to the reference direction is a first direction and one direction that is perpendicular to the reference direction and the first direction is a second direction,
the number of the (2-1)-th slits located in a first reference area defined by a first line extending from the reference axis along the first direction and a second line extending from the reference axis along the second direction, when viewed along the reference direction, is the same as the number of the (2-2)-th slits located in the first reference area and
the number of the (2-1)-th slits located in a second reference area defined by the first line and a third line extending from the reference axis along an opposite direction to the second direction is smaller than the number of the (2-2)-th slits located in the second reference area.

12. The injector of claim 11, wherein the numbers of the (2-1)-th slits (22a) and the (2-2)-th slits (22b)
located in the first reference area is the same as the numbers of the (2-1)-th slits and the (2-2)-th slits located in a third reference area defined by a fourth line extending from the reference axis along an opposite direction to the first direction and the third line, and
wherein the numbers of the (2-1)-th slits and the (2-2)-th slits located in the second reference area is the same as the numbers of the (2-1)-th slits and the (2-2)-th slits located in a fourth reference area defined by the second line and the fourth line, respectively.

13. The injector of claim 1, wherein the plurality of second slit portions are provided, and
wherein the numbers of the second slit portions disposed on opposite sides of a reference plane that is an imaginary plane including the reference axis when the injector body is divided by the reference plane are different.

14. A burner comprising:
a supply pipe (2) configured to supply a fuel and air;
an injector according to claim 1, coupled to the supply pipe (2) and configured to inject the fuel and the air, which are introduced thereinto; and
a combustion chamber (3) configured such that the fuel and the air injected by the injector are introduced thereinto.

15. A gas turbine comprising:
a compressor configured to compress and discharge air;
a burner configured to mix a fuel and the air compressed and discharged by the compressor, and then generate a combustion gas by burning a mixture of the fuel and the air; and
turbine blades configured to be rotated by the combustion gas delivered from the burner,
wherein the burner includes:
an injector according to claim 1, configured to inject the fuel and the air compressed and discharged by the compressor, which are mixed.

## Patentansprüche

1. Injektor für eine Brennkammer eines Gasturbinentriebwerks, wobei der Injektor umfasst:
einen Injektorkörper und
einen Schlitz, der so geformt ist, dass der Injektorkörper entlang einer Bezugsrichtung verläuft,
wobei der Schlitz einschließt:
einen ersten Schlitzabschnitt mit einer Form, die sich entlang einer Umfangsrichtung eines imaginären Referenzkreises erstreckt, dessen Mittelpunkt eine imaginäre Referenzachse ist, die sich entlang der Referenzrichtung erstreckt; und
einen zweiten Schlitzabschnitt mit einer Form, die sich entlang einer radialen Richtung des Referenzkreises erstreckt,
wobei der erste Schlitzabschnitt umfasst:
einen (1-1)-ten Schlitz mit einer Form, die sich entlang eines imaginären ersten Referenzkreises erstreckt, dessen Mittelpunkt die Referenzachse ist; und
einen (1-2)-ten Schlitz mit einer Form, die sich entlang einer Umfangsrichtung eines imaginären zweiten Referenzkreises erstreckt, dessen Mittelpunkt die Referenzachse ist und dessen Durchmesser größer ist als der des ersten Referenzkreises,
**dadurch gekennzeichnet, dass**
wenn davon ausgegangen wird, dass eine Fläche zwischen dem ersten Referenzkreis und dem zweiten Referenzkreis eine erste Fläche ist,
der zweite Schlitzabschnitt (22) umfasst:
einen (2-1)-ten Schlitz (22a), der in dem ersten Bereich angeordnet ist und sich in einer radialen Richtung des ersten Teilkreises erstreckt.

2. Injektor nach Anspruch 1, wobei bei Betrachtung entlang der Referenzrichtung,
der (1-1)-te Schlitz und der (2-1)-te Schlitz (22a) entlang der radialen Richtung des ersten Referenzkreises voneinander beabstandet sind.

3. Injektor nach Anspruch 1, wobei eine Vielzahl von (1-1)-ten Schlitzen (21a) ausgebildet ist, und
wobei die mehreren (1-1)-ten Schlitze (21a) entlang einer Umfangsrichtung des ersten Referenzkreises voneinander beabstandet sind und ein Abschnitt des ersten Referenzkreises die Form eines ersten Referezbogens hat.

4. Injektor nach Anspruch 3, wobei eine Vielzahl von (1-2)-ten Schlitzen (21b) gebildet wird,
wobei die mehreren (1-2)-ten Schlitze (21b) entlang einer Umfangsrichtung des zweiten Referenzkreises voneinander beabstandet sind und ein Abschnitt des zweiten Referenzkreises die Form eines zweiten Referenzbogens hat, und
wobei die Größe eines zentralen Winkels einer ersten Fächerform, die den ersten Referenzbogen definiert, größer ist als eine Größe einer zweiten Fächerform, die den zweiten Referenzbogen definiert.

5. Injektor nach Anspruch 1, wobei eine Vielzahl von (2-1)-ten Schlitzen (22a) ausgebildet ist, und
wobei die Vielzahl der (2-1)-ten Schlitze (22a) entlang der Umfangsrichtung des ersten Referenzkreises voneinander beabstandet sind.

6. Injektor nach Anspruch 5, wobei eine Vielzahl von (1-1)-ten Schlitzen (21a) ausgebildet ist, und
wobei die Vielzahl der (1-1)-ten Schlitze (21a) entlang der Umfangsrichtung des ersten Referenzkreises voneinander beabstandet sind, und
wobei angenommen wird, dass ein Raum zwischen einem Paar von (1-1)-ten Schlitzen (21a), die einander benachbart sind, ein (1-1)-ter Abstandsraum ist,
der (2-1)-te Schlitz (21a) umfasst:
einen den Abstandsraum überlappenden Schlitz, der den (1-1)-ten Abstandsraum in radialer Richtung gesehen überlappt.

7. Injektor nach Anspruch 1, wobei eine Vielzahl von (1-1)-ten Schlitzen (21a) und eine Vielzahl von (1-2)-ten Schlitzen ausgebildet sind, und
wobei die Anzahl der (1-1)-ten Schlitze (21a) kleiner ist als die Anzahl der (1-2)-ten Schlitze (21b).

8. Injektor nach Anspruch 1, wobei der erste Schlitzabschnitt ferner umfasst:
einen (1-3)-ten Schlitz (21c) mit einer Form, die sich entlang einer Umfangsrichtung eines imaginären dritten Referenzkreises erstreckt, dessen Zentrum die Referenzachse ist und dessen Durchmesser größer ist als der des zweiten Referenzkreises, und
wobei angenommen wird, dass eine Fläche zwischen dem zweiten Referenzkreis und dem dritten Referenzkreis eine zweite Fläche ist,
der zweite Schlitzabschnitt umfasst ferner:
einen (2-2)-ten Schlitz (22b), der in dem zweiten Bereich angeordnet ist und sich in einer radialen Richtung des zweiten Referenzkreises erstreckt.

9. Injektor nach Anspruch 8, wobei eine Vielzahl von (2-1)-ten Schlitzen (22a) und eine Vielzahl von (2-2)-ten Schlitzen (22b) ausgebildet sind, und
wobei die Anzahl der (2-1)-ten Schlitze kleiner ist als die Anzahl der (2-2)-ten Schlitze.

10. Injektor nach Anspruch 9, wobei eine Vielzahl von (2-1)-ten Schlitzen (22a) und eine Vielzahl von (2-2)-ten (22b) Schlitzen ausgebildet sind, und
wobei der (2-2)-te Schlitz einschließt:
einen Überlappungsschlitz, der in radialer Richtung gesehen jeden der (2-1)-ten Schlitze überlappt.

11. Injektor nach Anspruch 9, wobei eine Vielzahl von (2-1)-ten Schlitzen (22a) und eine Vielzahl von (2-2)-ten Schlitzen (22b) ausgebildet sind, und wobei, wenn angenommen wird, dass eine Richtung, die senkrecht zur Bezugsrichtung steht, eine erste Richtung ist und eine Richtung, die senkrecht zur Bezugsrichtung und zur ersten Richtung steht, eine zweite Richtung ist,
die Anzahl der (2-1)-ten Schlitze, die sich in einem ersten Referenzbereich befinden, der durch eine erste Linie, die sich von der Referenzachse entlang der ersten Richtung erstreckt, und eine zweite Linie, die sich von der Referenzachse entlang der zweiten Richtung erstreckt, definiert ist, bei Betrachtung entlang der Referenzrichtung die gleiche ist wie die Anzahl der (2-2)-ten Schlitze, die sich in dem ersten Referenzbereich befinden, und
die Anzahl der (2-1)-ten Schlitze, die sich in einem zweiten Referenzbereich befinden, der durch die erste Linie und eine dritte Linie definiert ist, die sich von der Referenzachse entlang einer zur zweiten Richtung entgegengesetzten Richtung erstreckt, kleiner ist als die Anzahl der (2-2)-ten Schlitze, die sich in dem zweiten Referenzbereich befinden.

12. Injektor nach Anspruch 11, wobei die Anzahl der (2-1)-ten Schlitze (22a) und der (2-2)-ten Schlitze (22b), die sich in dem ersten Referenzbereich befinden, die gleiche ist wie die Anzahl der (2-1)-ten Schlitze und der (2-2)-ten Schlitze, die sich in einem dritten Referenzbereich befinden, der durch eine vierte Linie definiert ist, die sich von der Referenzachse entlang einer entgegengesetzten Richtung zu der ersten Richtung und der dritten Linie erstreckt, und
wobei die Anzahl der (2-1)-ten Schlitze und der (2-2)-ten Schlitze, die sich in dem zweiten Referenzbereich befinden, die gleiche ist wie die Anzahl der (2-1)-ten Schlitze und der (2-2)-ten Schlitze, die sich in einem vierten Referenzbereich befinden, der durch die zweite Linie bzw. die vierte Linie definiert ist.

13. Injektor nach Anspruch 1, wobei eine Vielzahl von zweiten Schlitzabschnitten vorgesehen ist, und
wobei die Anzahl der zweiten Schlitzabschnitte, die auf gegenüberliegenden Seiten einer Referenzebene angeordnet sind, die eine imaginäre Ebene ist, die die Referenzachse enthält, wenn der Injektorkörper durch die Referenzebene geteilt wird, unterschiedlich ist.

14. Brenner, aufweisend:
eine Versorgungsleitung (2), die für die Zufuhr von Kraftstoff und Luft ausgelegt ist;
ein Injektor nach Anspruch 1, der mit der Zuführungsleitung (2) gekoppelt und so konfiguriert ist, dass er den Kraftstoff und die Luft einspritzt, die in diese eingeleitet werden; und
eine Brennkammer (3), die so konfiguriert ist, dass der Kraftstoff und die von dem Injektor eingespritzte Luft in sie eingeleitet werden.

15. Gasturbine mit:
einem Kompressor, der so konfiguriert ist, dass er Luft komprimiert und abgibt;
einem Brenner, der so konfiguriert ist, dass er einen Brennstoff und die vom Kompressor komprimierte und ausgestoßene Luft mischt und dann ein Verbrennungsgas durch Verbrennen eines Gemischs aus dem Brennstoff und der Luft erzeugt; und
Turbinenschaufeln, die so konfiguriert sind, dass sie durch das vom Brenner gelieferte Verbrennungsgas in Drehung versetzt werden,
wobei der Brenner umfasst:
einen Injektor nach Anspruch 1, der so konfiguriert ist, dass er den Kraftstoff und die vom Kompressor komprimierte und ausgestoßene Luft, die sich vermischen, einspritzt.

## Revendications

1. Un injecteur pour une chambre de combustion d'un moteur à turbine à gaz, l'injecteur comprenant :
un corps d'injecteur ; et
une fente formée pour faire passer le corps de l'injecteur le long d'une direction de référence,
dans lequel la fente comprend:
une première partie fendue ayant une forme qui s'étend le long de la direction circonférentielle d'un cercle de référence imaginaire, dont le centre est un axe de référence imaginaire qui s'étend le long de la direction de référence ; et
une deuxième partie fendue ayant une forme qui s'étend le long d'une direction radiale du cercle de référence,
dans laquelle la première partie de la fente comprend :
une (1-1)-ième fente dont la forme s'étend le long d'un premier cercle de référence imaginaire dont le centre est l'axe de référence ; et
une (1-2)-ième fente ayant une forme qui s'étend le long de la direction circonférentielle d'un second cercle de référence imaginaire, dont le centre est l'axe de référence et dont le diamètre est plus grand que celui du premier cercle de référence,
**caractérisé par le fait que**
lorsqu'il est supposé qu'une zone comprise entre le premier cercle de référence et le deuxième cercle de référence est une première zone,
la deuxième partie fendue (22) comprend :
une (2-1)-ième fente (22a) disposée dans la première zone et s'étendant dans une direction radiale du premier cercle de référence.

2. L'injecteur de la revendication 1, dans lequel, vu le long de la direction de référence,
la (1-1)-ème fente et la (2-1)-ème fente (22a) sont espacées l'une de l'autre le long de la direction radiale du premier cercle de référence.

3. L'injecteur de la revendication 1, dans lequel une pluralité de (1-1)-ème fentes (21a) sont formées, et
dans lequel la pluralité de (1-1)-ème fentes (21a) sont espacées les unes des autres le long d'une direction circonférentielle du premier cercle de référence, et une partie du premier cercle de référence a la forme d'un premier arc de référence.

4. L'injecteur de la revendication 3, dans lequel une pluralité de (1-2)-ème fentes (21b) sont formées,
dans lequel la pluralité de (1-2)-ième fentes (21b) sont espacées les unes des autres le long d'une direction circonférentielle du second cercle de référence, et une partie du second cercle de référence a la forme d'un second arc de référence, et
dans lequel la taille d'un angle central d'une première forme d'éventail qui définit le premier arc de référence est plus grande que la taille d'une deuxième forme d'éventail qui définit le deuxième arc de référence.

5. L'injecteur de la revendication 1, dans lequel une pluralité de (2-1)-ième fentes (22a) sont formées, et
dans lequel la pluralité de (2-1)-ème fentes (22a) sont espacées les unes des autres le long de la direction circonférentielle du premier cercle de référence.

6. L'injecteur de la revendication 5, dans lequel une pluralité de (1-1)-ème fentes (21a) sont formées, et
dans lequel la pluralité de (1-1)-ème fentes (21a) sont espacées les unes des autres le long de la direction circonférentielle du premier cercle de référence, et
où l'on suppose que l'espace entre une paire de (1-1)-e fentes (21a) adjacentes est un espace d'espacement (1-1)-e,
la (2-1)-ème fente (21a) comprend :
une fente de chevauchement de l'espace d'espacement qui chevauche le (1-1)-ème espace d'espacement lorsqu'il est observé le long de la direction radiale.

7. L'injecteur de la revendication 1, dans lequel une pluralité de (1-1)-ème fentes (21a) et une pluralité de (1-2)-ème fentes sont formées, et
dans lequel le nombre de (1-1)-ème fentes (21a) est inférieur au nombre de (1-2)-ème fentes (21b).

8. L'injecteur de la revendication 1, dans lequel la première partie fendue comprend en outre :
une (1-3)-ième fente (21c) dont la forme s'étend le long de la direction circonférentielle d'un troisième cercle de référence imaginaire dont le centre est l'axe de référence et dont le diamètre est supérieur à celui du deuxième cercle de référence, et
dans lequel, lorsqu'il est supposé qu'une zone entre le deuxième cercle de référence et le troisième cercle de référence est une deuxième zone,
la seconde partie de la fente comprend en outre
une (2-2)-ième fente (22b) disposée dans la deuxième zone et s'étendant dans une direction radiale du deuxième cercle de référence.

9. L'injecteur de la revendication 8, dans lequel une pluralité de (2-1)-ème fentes (22a) et une pluralité de (2-2)-ème fentes (22b) sont formées, et
dans lequel le nombre de (2-1)-ème fentes est inférieur au nombre de (2-2)-ème fentes.

10. L'injecteur de la revendication 9, dans lequel une pluralité de (2-1)-ème fentes (22a) et une pluralité de (2-2)-ème (22b) fentes sont formées, et
dans laquelle la (2-2)-ième fente comprend :
une fente de chevauchement qui chevauche l'une des (2-1)-e fentes lorsqu'elle est observée dans la direction radiale.

11. L'injecteur de la revendication 9, dans lequel une pluralité de (2-1)-ème fentes (22a) et une pluralité de (2-2)-ème fentes (22b) sont formées, et
où l'on suppose qu'une direction perpendiculaire à la direction de référence est une première direction et qu'une direction perpendiculaire à la direction de référence et à la première direction est une deuxième direction,
le nombre de (2-1)-èmes fentes situées dans une première zone de référence définie par une première ligne s'étendant à partir de l'axe de référence le long de la première direction et une deuxième ligne s'étendant à partir de l'axe de référence le long de la deuxième direction, lorsqu'elles sont observées le long de la direction de référence, est le même que le nombre de (2-2)-èmes fentes situées dans la première zone de référence et
le nombre de (2-1)-e fentes situées dans une deuxième zone de référence définie par la première ligne et une troisième ligne s'étendant à partir de l'axe de référence le long d'une direction opposée à la deuxième direction est inférieur au nombre de (2-2)-e fentes situées dans la deuxième zone de référence.

12. L'injecteur de la revendication 11, dans lequel les nombres des (2-1)-ème fentes (22a) et des (2-2)-ème fentes (22b) situées dans la première zone de référence sont les mêmes que les nombres des (2-1)-ème fentes et des (2-2)-ème fentes situées dans une troisième zone de référence définie par une quatrième ligne s'étendant à partir de l'axe de référence le long d'une direction opposée à la première direction et à la troisième ligne, et
dans lequel les nombres des (2-1)-ème fentes et des (2-2)-ème fentes situées dans la deuxième zone de référence sont les mêmes que les nombres des (2-1)-ème fentes et des (2-2)-ème fentes situées dans une quatrième zone de référence définie par la deuxième ligne et la quatrième ligne, respectivement.

13. L'injecteur de la revendication 1, dans lequel la pluralité de secondes portions de fentes est fournie, et
dans lequel les nombres des secondes portions de fentes disposées sur les côtés opposés d'un plan de référence qui est un plan imaginaire comprenant l'axe de référence lorsque le corps de l'injecteur est divisé par le plan de référence sont différents.

14. Un brûleur comprenant :
un tuyau d'alimentation (2) configuré pour fournir du carburant et de l'air ;
un injecteur selon la revendication 1, couplé au tuyau d'alimentation (2) et configuré pour injecter le carburant et l'air qui y sont introduits ; et
une chambre de combustion (3) configurée de telle sorte que le carburant et l'air injectés par l'injecteur y soient introduits.

15. Une turbine à gaz comprenant :
un compresseur configuré pour comprimer et évacuer l'air ;
un brûleur configuré pour mélanger un combustible et l'air comprimé et évacué par le compresseur, puis pour générer un gaz de combustion en brûlant un mélange de combustible et d'air ; et
des pales de turbine configurées pour être mises en rotation par le gaz de combustion délivré par le brûleur,
dans lequel le brûleur comprend :
un injecteur selon la revendication 1, configuré pour injecter le carburant et l'air comprimé et refoulé par le compresseur, qui sont mélangés.
